# EUROPEAN PATENT SPECIFICATION

(11) **EP 4 005 932 B1**
(45) Date of publication and mention of the grant of the patent: **30.08.2023**
(21) Application number: 21208210.1
(22) Date of filing: 15.11.2021
(51) Int. Cl.: B64D 45/08, B64F 1/18, B64D 47/08

(54) **AUTOMATED AERODROME ENERGIZATION AND INTENSITY CONTROL SYSTEM AND METHOD**
AUTOMATISIERTES SYSTEM UND VERFAHREN ZUR STEUERUNG DER ENERGIEVERSORGUNG UND INTENSITÄT EINES FLUGPLATZES
SYSTÈME ET PROCÉDÉ D'ALIMENTATION ÉNERGÉTIQUE AUTOMATIQUE ET DE RÉGULATION DE L'INTENSITÉ D'AÉRODROME

(30) Priority: 25.11.2020 IN 202011051246; 08.01.2021 US 202117144401
(43) Date of publication of application: 01.06.2022
(73) Proprietor: Honeywell International Inc., Charlotte, NC 28202 (US)
(72) Inventor: SURENDRAN, Anoop, Charlotte, 28202 (US); MOORTHY, Nathan Krishna, Charlotte, 28202 (US)
(74) Representative: LKGlobal UK Ltd.

(56) References cited:
- US-A- 5 335 112
- US-A1- 2013 147 641
- US-B1- 10 220 960

## Description

### CROSS REFERENCE TO RELATED APPLICATION

The present application claims benefit of prior filed Indian Provisional Patent Application No. 202011051246, filed November 25, 2020.

### TECHNICAL FIELD

The present disclosure generally relates to aerodrome lighting, and more particularly relates to a system and method for automatically energizing, and controlling the intensity of, aerodrome lighting.

### BACKGROUND

Some airfields do not include a control tower or are used relatively infrequently. At such airfields, it may not be economical to keep various aerodrome lighting energized nor to provide personnel to energize and de-energize the various aerodrome lighting. As a result, a system was devised that enables pilots to controllably energize the lighting at these airfields. This system, which may be referred to as Pilot Controlled Lighting (PCL), Pilot Activated Lighting (PAL), or more generally as Aircraft Radio Control of Aerodrome Lighting (ARCAL), allows aircraft pilots to control various aerodrome lighting using the aircraft communications radio. The PCL controlled aerodrome lighting may include one or more of the approach lights, runway edge lights, and taxiway lights.

To activate ARCAL aerodrome lights, an aircraft pilot tunes the radio to the specific ARCAL frequency associated with the aerodrome of interest, and then repeatedly operates (or "keys") the radio microphone transmit switch a specific number of times within a specific time period. The specific number of clicks and the specific time period will depend upon the type of ARCAL system implemented at the airfield. Presently, there are two type of ARCAL systems--a type J system and a type K system. With type J systems, aerodrome lighting is energized by keying the radio microphone transmit switch 5 times within 5 seconds. With type K systems, aerodrome lighting is initially energized by keying the radio microphone transmit switch 7 times within 5 seconds. Thereafter, the intensity of the aerodrome lights in type K systems may be set to low, medium, or high intensity by keying the radio microphone transmit switch 3, 5, or 7 times, respectively, within 5 seconds. If runway identification lights are also controlled by a type K system, these lights may be turned off by keying the radio microphone transmit switch 3 times.

The approach and landing phase of an aircraft is a relatively important phase of flight. When conducting an approach and landing, the primary focus of a pilot is preferably on such tasks as looking out for other traffic and communicating position, intent, etc. on the communication radio. However, when conducting an approach and landing at a ARCAL controlled aerodrome, the pilot may become focused on ensuring the aerodrome lighting gets energized and, once energized, stays energized. This can detract from the relatively high workload associated with a landing. Moreover, in the unlikely case the pilot were to become incapacitated and need to implement an automatically landing, the pilot may not be able to take action to energize the aerodrome lighting.

Hence, there is a need for a system and method that can automatically enable aerodrome lighting and automatically adjust the intensity of the enabled aerodrome lighting. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an automated aerodrome lighting control system for an aircraft includes a communication radio, an aerodrome lighting data source, a camera, and a processor. The communication radio is configured to selectively transmit radio frequency (RF) signals. The aerodrome lighting data source is configured to at least selectively supply aerodrome lighting data representative of light control characteristics of aerodrome lighting associated with individual aerodromes. The camera is mounted on the aircraft and has a field of view. The camera is configured to capture images of the aerodrome lighting within its field of view and supply image data representative of an intensity of light transmitted from the aerodrome lighting within its field of view. The processor is in operable communication with the aerodrome lighting data source, the camera, and the communication radio. The processor is configured to: retrieve, from the aerodrome lighting data source, aerodrome lighting data associated with an individual aerodrome, process the image data supplied from the camera, and command the communication radio to transmit RF signals consistent with the light control characteristics associated with the individual aerodrome and based on the image data supplied from the camera.

In another embodiment, a method to automatically control aerodrome lighting from an aircraft includes selectively retrieving, via a processor, aerodrome lighting data associated with an individual aerodrome from an aerodrome lighting data source. Images are captured, using a camera having a field of view and being mounted on the aircraft, of aerodrome lighting within the camera's field of view. Image data are supplied from the camera to the processor, where the image data is representative of an intensity of light transmitted from the aerodrome lighting within the camera's field of view. The aerodrome lighting data and the image data are processed in the processor and, in response to processing the aerodrome lighting data and the image data, commands are selectively supplied, via the processor, to a communication radio that cause the communication radio to transmit RF signals consistent with the light control characteristics associated with the individual aerodrome and based on image data supplied from the camera.

In yet another embodiment, an automated aerodrome lighting control system for an aircraft includes a communication radio, an aerodrome lighting data source, a camera, a flight plan data source, and a processor. The communication radio is configured to selectively transmit radio frequency (RF) signals. The aerodrome lighting data source is configured to at least selectively supply aerodrome lighting data representative of light control characteristics of aerodrome lighting associated with individual aerodromes. The camera is mounted on the aircraft and has a field of view. The camera is configured to capture images of the aerodrome lighting within its field of view and supply image data representative of an intensity of light transmitted from the aerodrome lighting within its field of view. The flight plan data source is configured to supply flight plan data that includes at least data representative of a destination airport having an aerodrome on which to land the aircraft. The processor is in operable communication with the aerodrome lighting data source, the camera, the flight plan data source, and the communication radio. The processor is configured to: retrieve, from the aerodrome lighting data source, aerodrome lighting data associated with an individual aerodrome, process the image data supplied from the camera, receive and process the flight plan data to determine when at least one predetermined criterion is met, and automatically command the communication radio to transmit the RF signals consistent with the light control characteristics associated with the individual aerodrome on which the aircraft may land and based on the image data supplied from the camera when the at least one predetermined criterion is met.

Furthermore, other desirable features and characteristics of the automated aerodrome lighting control system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of one embodiment of an automated aerodrome lighting control system for an aircraft; and
FIG. 2 depicts a process, in flowchart form, that may be implemented by the system of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

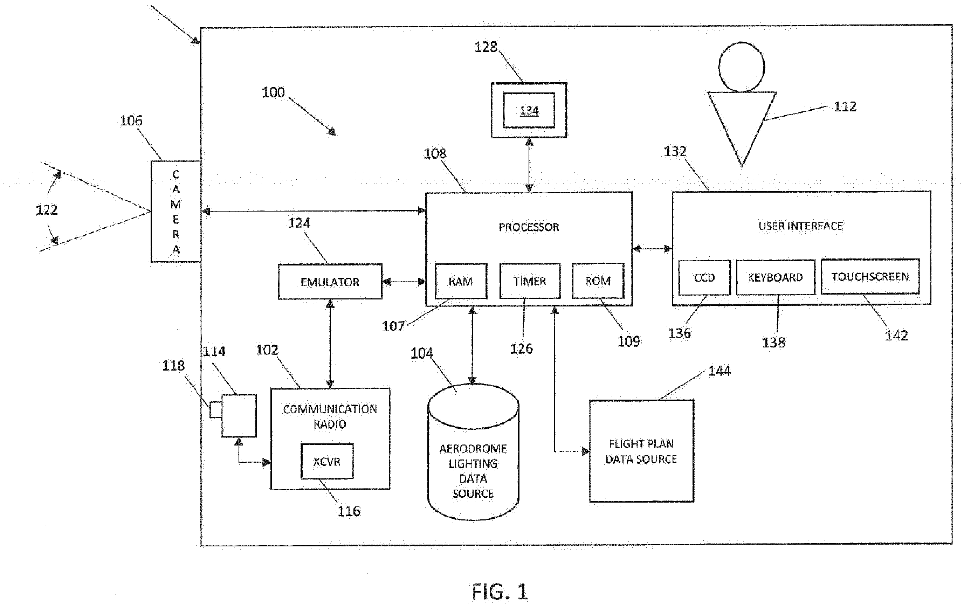

Referring now to FIG. 1, a functional block diagram of one exemplary embodiment of an automated aerodrome lighting control system 100 is depicted, and includes a communication radio 102, an aerodrome lighting data source 104, a camera 106, and a processor 108, all disposed in or on an aircraft 110. The communication radio 102, which may be variously configured and implemented, is used to selectively transmit and receive radio frequency (RF) signals, to allow communications between an aircraft pilot 112 and various external entities, such as air traffic controllers and pilots of other aircraft. To do so, the communication radio 102 includes a radio microphone 114 and a transceiver 116. The radio microphone 114 includes a transmit switch 118 that, when pressed by a user (e.g., a pilot 112), configures the radio microphone 114 to convert audible sounds to electrical signals in the audio frequency range. The transceiver 116 receives the audio frequency signals from the radio microphone 114, modulates an RF carrier signal with the audio frequency signals, and transmits the modulated RF signal.

The aerodrome lighting data source 104 is configured to at least selectively supply aerodrome lighting data. As used herein, aerodrome lighting data are data representative of light control characteristics of aerodrome lighting associated with individual aerodromes. The specific content of the aerodrome lighting data may vary, but typically includes at least the type of ARCAL system that is installed (e.g., type J or type K) and the transmission frequency at which the aerodrome lighting may be energized and controlled. It will be appreciated that although the aerodrome lighting data source 104 is, for clarity and convenience, depicted as being implemented in a storage structure that is separate from the processor 108, all or portions of the aerodrome lighting data source 104 could be loaded into, or integrally formed as part of, the processor 108. The aerodrome lighting data source 104 could also be part of a device or system that is physically separate from the automated aerodrome lighting control system 100.

The camera 106 is mounted on the aircraft 110 and, as is known, has a field of view 122. The camera 106 is configured to capture images of at least aerodrome lighting within its field of view 122 and to supply image data representative of the intensity of the light transmitted from the aerodrome lighting that is within its field of view 122. It will be appreciated that the camera 106 will capture images of other entities within its field of view, but the image data representative of the intensity of the light transmitted from the aerodrome lighting is what is of utmost importance for this disclosure. It will additionally be appreciated that the camera 106 may be implemented using any one of numerous types of cameras. Some non-limiting examples include an infrared (IR) camera, a multispectral camera, a hyperspectral camera, and a stereo camera, just to name a few. In a particular embodiment, however, the camera 106 is implemented using an IR camera.

The processor 108 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the processor 108 includes processing logic that may be configured to carry out the functions, techniques, and processing tasks that automate the flight plan and that implement the additional functions that are described in greater detail below. Furthermore, the steps of a method or algorithm described in connection with the embodiments disclosed herein may be embodied directly in hardware, in firmware, in a software module executed by the processor 108, or in any practical combination thereof. The processor 108 is configured to read and execute computer-executable programming instructions or other data that cause the processor 108 to execute and perform one or more of the processes, tasks, operations, and/or functions described herein.

In the depicted embodiment, the processor 108 includes on-board RAM (random access memory) 107, and on-board ROM (read only memory) 109. The program instructions that control the processor 108 may be stored in either or both the RAM 107 and the ROM 109. For example, the operating system software may be stored in the ROM 109, whereas various operating mode software routines and various operational parameters may be stored in the RAM 107. It will be appreciated that this is merely exemplary of one scheme for storing operating system software and software routines, and that various other storage schemes may be implemented.

No matter how the processor 108 is specifically implemented, it is in operable communication with the communication radio 102, the aerodrome lighting data source 104, and the camera 106. The processor 108 is configured to selectively retrieve, from the aerodrome lighting data source 104, aerodrome lighting data associated with an individual aerodrome. The processor 108 is additionally configured to process the image data supplied from the camera 108 and to selectively command the communication radio 102 to transmit RF signals consistent with the light control characteristics associated with the individual aerodrome and based on the image data supplied from the camera 108. More specifically, the processor 108 is configured to automatically command the communication radio 102 to transmit the RF signals with no input to the system 100 from the pilot 108. In particular, the processor 108 is configured to automatically command the communication radio 102 to transmit the RF signals in response to determining that at least one predetermined criterion is met. Before discussing this process and the at least one predetermined criterion, however, some additional features of the depicted system 100 will be described.

As is generally known, when the transmit switch 118 on the radio microphone 114 is operated or "keyed," a microphone "click" signal is momentarily generated. This microphone click signal is also in the audio frequency range and modulates the RF carrier signal. Thus, the depicted system 100 additionally includes an emulator 124. The emulator 124 is in operable communication with the communication radio 102. The emulator 124 is configured, in response to an emulator command, to generate an emulated microphone click signal and supply the emulated signal to the communication radio 102. In the communication radio 102, the emulated microphone click signal modulates the RF carrier signal, which is then transmitted. The emulator 124 is also in operable communication with, and receives the emulator command from, the processor 108. Thus, as may be appreciated, the processor 108 is additionally configured to supply the emulator command. It is noted that for clarity and ease of description and illustration, the emulator 124 is depicted as being separate from the communication radio 102 and the processor 108. It will be appreciated, however, that in some embodiments the emulator 124 may be implemented in the processor 108, or in the communication radio 102, or partially in both.

As is generally known, whenever ARCAL aerodrome lighting is energized, a countdown commences, and when the countdown is completed, the aerodrome lighting is automatically deenergized. Typically, this countdown is about 15-minutes long. Thus, the system 100 may also include a timer 126 to ensure that the system 100 is at least substantially synced with the ARCAL countdown. It will be appreciated that the processor 108 is additionally configured to start the timer 126 and, using the timer 126, to determine when a predetermined time period has lapsed. The predetermined time period may vary, and may be a fixed, preset time period, or a user-selectable time period. In any case, the predetermined time period is preferably less than 15-minutes. As will be discussed further below, when the predetermined time period has lapsed, the processor 108 may command the communication radio 102 to retransmit the appropriate RF signals. In the depicted embodiment, the timer 126 is implemented in the processor 108. It will be appreciated, however, that in other embodiments the timer 126 could be implemented as a separate entity or as part of another system, circuit, or device.

The depicted system 100 may, at least in some embodiments, additionally include a display device 128 and a user interface 132, which are both in operable communication with the processor 108. The display device 128 includes a display 134 and is configured to receive image rendering display commands from the processor 108. The display device 128 is responsive to the image rendering display commands to render one or more images on the display 128, and thereby supplies visual feedback to the pilot 108. The specific types of images that the display device 128 is commanded to render on the display 128 may vary depending, for example, on how the display device 128 is configured, and may include images captured via the camera 106. In this regard, it will be appreciated that the display device 128 may be configured as any one (or more) of numerous types of aircraft flight deck display devices that may implement the functionality described herein. For example, the display device 128 may be configured as a multi-function display, a primary flight display, a horizontal situation indicator, a vertical situation indicator, or a navigation display, just to name a few. The display device 128 may additionally be implemented as a panel mounted display device, a HUD (head-up display) projection display device, various portable and/or hand-held display devices, or any one of numerous known technologies. It is furthermore noted that the display 128 may be implemented using any one of numerous known displays suitable for rendering textual, graphic, and/or iconic information in a format viewable by the pilot 108. Non-limiting examples of such displays include various cathode ray tube (CRT) displays, and various flat panel displays such as various types of LCD (liquid crystal display), various types of LED (light emitting diode), touchscreen, and TFT (thin film transistor) displays.

The user interface 132 configured to receive input from the pilot 112 and, in response to user input, supply command signals to the processor 108. The user interface 132 may include any one of, or combination of, various known user interface devices including, but not limited to, a cursor control device (CCD), such as a mouse, a trackball, or joystick, and/or a keyboard, one or more buttons, switches, or knobs. In the depicted embodiment, the user interface 132 includes a CCD 136, a keyboard 138, and a touchscreen 142. The pilot 112 uses the CCD 136 to, for example, move a cursor symbol that may be rendered on the display 134, uses the keyboard 138 to, for example, input textual data, and uses the touchscreen to, for example, implement either or both of these functions.

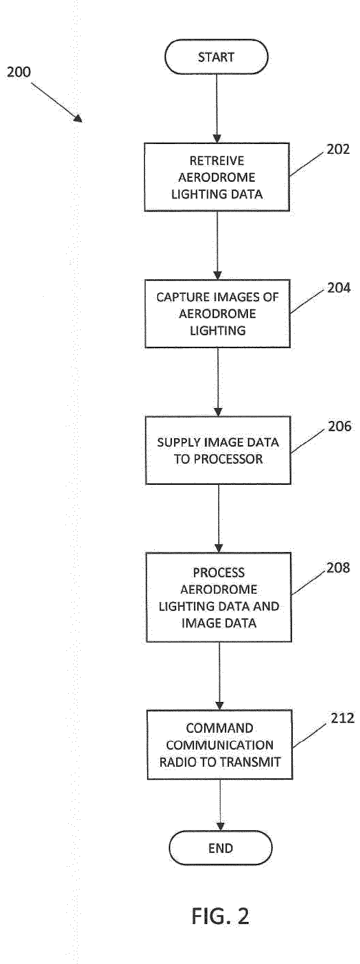

The system 100 described above implements a process for automatically controlling aerodrome lighting from an aircraft 110. The process 200 is depicted in flowchart form in FIG. 2, and with reference thereto will now be described. In doing so, parenthetical reference numerals refer to like flowchart symbols in FIG. 2.

The depicted process 200 is initiated when the processor 108 retrieves aerodrome lighting data associated with an individual aerodrome from the aerodrome lighting data source 104 (202). Meanwhile, images are captured, using the camera 106, of aerodrome lighting within the camera's field of view (204). The camera 106 supplies image data that is representative of the intensity of light transmitted from the aerodrome lighting within the camera's field of view to the processor 108 (206). The processor 108 processes the aerodrome lighting data and the image data in the processor (208) and, in response to this processing, selectively supplying commands to the communication radio 102 (212). The supplied commands cause the communication radio 102 to transmit RF signals consistent with the light control characteristics associated with the individual aerodrome and based on image data supplied from the camera 106.

In at least in some embodiments, the processor 108 may be configured to supply the commands to the communication radio 102 when at least one criterion is met. It will be appreciated that the at least one predetermined criterion may vary. For example, the predetermined criterion may be one or more of the aircraft 110 being within a selected range of the destination airport (e.g., 10 NM), the aircraft 110 being within a selected amount of time before reaching the destination airport, and the aircraft 110 being within a selected airspace region. In this regard, and with quick reference back to FIG. 1, it is seen that the system 100 may additionally include a flight plan data source 144, which supplies flight plan data. It will be appreciated that the number and type of flight plan data supplied may vary, but it includes at least data representative of a destination airport having an aerodrome on which to land an aircraft 110. It will also be appreciated that the flight plan data source 144 may be variously implemented. For example, it may be implemented as a flight management system (FMS) or a flight management computer (FMC).

Regardless of how the flight plan data source 144 is specifically implemented, it is in operable communication with the processor 108, and supplies flight plan data to the processor 108. The processor 108 is configured, upon receipt of the flight plan data, to determined when at least one of the above-noted predetermined criterions is met. When the processor 108 determines that at least one predetermined criterion is met, it then automatically commands the communication radio 102 to transmit the RF signals consistent with the light control characteristics associated with the individual aerodrome on which the aircraft may land and based on the image data supplied from the camera 108.

The system and method described herein provide significant technical advantages over presently known system. In particular, the system and method will automatically command the communication radio to transmit the RF signals with no pilot intervention and will do so, at least in some embodiments, in response to one or more predetermined criterion and based on the image data supplied from the camera. The automatic (and sudden) triggering of the aerodrome lights can help pilots to avoid landing at locations that could potentially be mistaken for runways. Moreover, the images from the camera can augment and/or correct any potential errors in the navigation database.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An automated aerodrome lighting control system (100) for an aircraft, comprising:
a communication radio (102) configured to selectively transmit radio frequency signals, i.e. RF signals;
an aerodrome lighting data source (104) configured to at least selectively supply aerodrome lighting data representative of light control characteristics of aerodrome lighting associated with individual aerodromes;
a camera (106) mounted on the aircraft and having a field of view, the camera configured to capture images of the aerodrome lighting within its field of view and supply image data representative of an intensity of light transmitted from the aerodrome lighting within its field of view; and
a processor (108) in operable communication with the aerodrome lighting data source, the camera, and the communication radio, the processor configured to:
retrieve, from the aerodrome lighting data source, aerodrome lighting data associated with an individual aerodrome,
process the image data supplied from the camera, and
command the communication radio to transmit RF signals consistent with the light control characteristics associated with the individual aerodrome and based on the image data supplied from the camera.

2. The system of claim 1, wherein the processor is further configured to:
receive and process flight plan data to determine when at least one predetermined criterion is met, the flight plan data including at least data representative of a destination airport having an aerodrome on which to land an aircraft; and
automatically command the communication radio to transmit the RF signals consistent with the light control characteristics associated with the individual aerodrome on which the aircraft may land and based on the image data supplied from the camera when the at least one predetermined criterion is met.

3. The system of claim 2, wherein the at least one predetermined criterion includes one of:
the aircraft being within a selected range of the destination airport;
the aircraft being within a selected amount of time before reaching the destination airport; and
the aircraft being within a selected airspace region.

4. The system of claim 1, wherein the camera is selected from the group consisting of an infrared camera, i.e. IR camera, a multispectral camera, a hyperspectral camera, and a stereo camera.

5. The system of claim 1, further comprising:
an emulator (124) in operable communication with the processor and the communication radio, the emulator configured to generate an emulated audio frequency signal and supply the emulated audio frequency signal to the communication radio.

6. The system of claim 5, wherein:
the processor is further configured to supply an emulator command to the emulator; and
the emulator is responsive to the emulator command to generate the emulated audio frequency.

7. The system of claim 6, wherein:
the communication radio includes a user-operated radio microphone (114), the radio microphone having a transmit switch (118) that, when operated, at least generates a microphone click signal; and
the emulated audio signal is an emulated microphone click signal.

8. The system of claim 1, wherein the light control characteristics include a transmission frequency and a lighting system type.

9. A method to automatically control aerodrome lighting from an aircraft, the method comprising the steps of:
selectively retrieving, via a processor (108), aerodrome lighting data associated with an individual aerodrome from an aerodrome lighting data source (104);
capturing images, using a camera (106) having a field of view and being mounted on the aircraft, of aerodrome lighting within the camera's field of view;
supplying image data from the camera to the processor, the image data representative of an intensity of light transmitted from the aerodrome lighting within the camera's field of view;
processing the aerodrome lighting data and the image data in the processor; and
in response to processing the aerodrome lighting data and the image data, selectively supplying commands, via the processor, to a communication radio (102) that cause the communication radio to transmit RF signals consistent with the light control characteristics associated with the individual aerodrome and based on image data supplied from the camera.

10. The method of claim 9, further comprising:
receiving and processing flight plan data in the processor, the flight plan data including at least data representative of a destination airport having an aerodrome on which to land an aircraft;
determining, in the processor, when at least one predetermined criterion is met; and
automatically supplying the commands, via the processor, to the communication radio to transmit the RF signals consistent with the light control characteristics associated with the individual aerodrome on which the aircraft may land and based on the image data supplied from the camera when the at least one predetermined criterion is met.

11. The method of claim 10, wherein the at least one predetermined criterion includes one of:
the aircraft being within a selected range of the destination airport;
the aircraft being within a selected amount of time before reaching the destination airport; and
the aircraft being within a selected airspace region.

12. The method of claim 9, further comprising:
generating, via an emulator (124), an emulated audio frequency signal; and
supplying, via the emulator, the emulated audio frequency signal to the communication radio.

13. The method of claim 12, further comprising:
supplying an emulator command, via the processor, to the emulator that causes the emulator to generate the emulated audio frequency.

14. The method of claim 13, wherein:
the communication radio includes a user-operated radio microphone (114), the radio microphone having a transmit switch (118) that, when operated, at least generates a microphone click signal; and
the emulated audio signal is an emulated microphone click signal.

15. The method of claim 9, wherein the light control characteristics include a transmission frequency and a lighting system type.

## Patentansprüche

1. Automatisiertes Flugplatzbeleuchtungssteuerungssystem (100) für ein Flugzeug, umfassend:
ein Kommunikationsfunkgerät (102), das konfiguriert ist, um selektiv Hochfrequenzsignale, d. h. HF-Signale, zu senden;
eine Flugplatzbeleuchtungsdatenquelle (104), die konfiguriert ist, um mindestens selektiv Flugplatzbeleuchtungsdaten zuzuführen, die repräsentativ für Lichtsteuerungseigenschaften der Flugplatzbeleuchtung sind, die einzelnen Flugplätzen zugeordnet sind;
eine Kamera (106), die am Flugzeug angebracht ist und über ein Sichtfeld verfügt, wobei die Kamera konfiguriert ist, um Bilder der Flugplatzbeleuchtung in ihrem Sichtfeld zu erfassen und Bilddaten zuzuführen, die repräsentativ für eine Intensität des von der Flugplatzbeleuchtung innerhalb ihres Sichtfelds gesendeten Lichts sind; und
einen Prozessor (108), der in betriebsfähiger Kommunikation mit der Flugplatzbeleuchtungsdatenquelle, der Kamera und dem Kommunikationsfunkgerät steht, wobei der Prozessor konfiguriert ist, um:
Flugplatzbeleuchtungsdaten aus der Flugplatzbeleuchtungsdatenquelle abzurufen, die einem einzelnen Flugplatz zugeordnet sind,
die von der Kamera zugeführten Bilddaten zu verarbeiten, und
dem Kommunikationsfunkgerät zu befehlen, HF-Signale zu senden, die den Lichtsteuerungseigenschaften des einzelnen Flugplatzes entsprechen und auf den von der Kamera zugeführten Bilddaten basieren.

2. System nach Anspruch 1, wobei der Prozessor ferner konfiguriert ist, um:
Flugplandaten zu empfangen und zu verarbeiten, um zu bestimmen, wann mindestens ein vorbestimmtes Kriterium erfüllt ist, wobei die Flugplandaten mindestens Daten einschließen, die repräsentativ für einen Zielflughafen sind, der einen Flugplatz aufweist, auf dem ein Flugzeug landen soll; und
dem Kommunikationsfunkgerät automatisch zu befehlen, die HF-Signale im Einklang mit den Lichtsteuerungseigenschaften des einzelnen Flugplatzes, auf dem das Flugzeug landen kann, und basierend auf den von der Kamera zugeführten Bilddaten zu senden, wenn das mindestens eine vorbestimmte Kriterium erfüllt ist.

3. System nach Anspruch 2, wobei das mindestens eine vorbestimmte Kriterium ferner eines einschließt von:
das Flugzeug befindet sich innerhalb einer ausgewählten Reichweite des Zielflughafens;
das Flugzeug befindet sich innerhalb einer ausgewählten Zeitspanne, bevor es den Zielflughafen erreicht; und
das Flugzeug befindet sich innerhalb einer ausgewählten Luftraumregion.

4. System nach Anspruch 1, wobei die Kamera aus der Gruppe bestehend aus einer Infrarotkamera, d. h. IR-Kamera, einer Multispektralkamera, einer Hyperspektralkamera und einer Stereokamera, ausgewählt ist.

5. System nach Anspruch 1, ferner umfassend:
einen Emulator (124), der in betriebsfähiger Kommunikation mit dem Prozessor und dem Kommunikationsfunkgerät steht, wobei der Emulator konfiguriert ist, um ein emuliertes Audiofrequenzsignal zu erzeugen und das emulierte Audiofrequenzsignal dem Kommunikationsfunkgerät zuzuführen.

6. System nach Anspruch 5, wobei:
der Prozessor ferner konfiguriert ist, um dem Emulator einen Emulatorbefehl zuzuführen; und
der Emulator auf den Emulatorbefehl reagiert, um die emulierte Audiofrequenz zu erzeugen.

7. System nach Anspruch 6, wobei:
das Kommunikationsfunkgerät ein vom Benutzer betätigtes Funkmikrofon (114) einschließt, wobei das Funkmikrofon einen Sendeschalter (118) aufweist, der bei Betätigung mindestens ein Mikrofon-Klicksignal erzeugt; und
das emulierte Audiosignal ein emuliertes Mikrofon-Klicksignal ist.

8. System nach Anspruch 1, wobei die Lichtsteuerungseigenschaften eine Übertragungsfrequenz und einen Beleuchtungssystemtyp einschließen.

9. Verfahren zur automatischen Steuerung der Flugplatzbeleuchtung von einem Flugzeug aus, wobei das Verfahren die Schritte umfasst:
selektives Abrufen von Flugplatzbeleuchtungsdaten, die einem einzelnen Flugplatz zugeordnet sind, mittels eines Prozessors (108) aus einer Flugplatzbeleuchtungsdatenquelle (104);
Erfassen von Bildern der Flugplatzbeleuchtung innerhalb des Sichtfelds der Kamera unter Verwendung einer Kamera (106), die über ein Sichtfeld verfügt und am Flugzeug angebracht ist;
Zuführen von Bilddaten von der Kamera zum Prozessor, wobei die Bilddaten repräsentativ für eine Intensität des von der Flugplatzbeleuchtung gesendeten Lichts innerhalb des Sichtfelds der Kamera sind;
Verarbeiten der Flugplatzbeleuchtungsdaten und der Bilddaten im Prozessor; und als Reaktion auf die Verarbeitung der Flugplatzbeleuchtungsdaten und der Bilddaten selektives Zuführen von Befehlen mittels des Prozessors zu einem Kommunikationsfunkgerät (102), die das Kommunikationsfunkgerät veranlassen, HF-Signale zu senden, die mit den Lichtsteuerungseigenschaften übereinstimmen, die dem einzelnen Flugplatz zugeordnet sind, und basierend auf den von der Kamera zugeführten Bilddaten.

10. Verfahren nach Anspruch 9, ferner umfassend:
Empfangen und Verarbeiten von Flugplandaten im Prozessor, wobei die Flugplandaten mindestens Daten einschließen, die repräsentativ für einen Zielflughafen sind, der einen Flugplatz aufweist, auf dem ein Flugzeug landen soll;
Bestimmen im Prozessor, wann mindestens ein vorbestimmtes Kriterium erfüllt ist; und
automatisches Zuführen der Befehle mittels des Prozessors zum Kommunikationsfunkgerät, die HF-Signale im Einklang mit den Lichtsteuerungseigenschaften des einzelnen Flugplatzes, auf dem das Flugzeug landen kann, und basierend auf den von der Kamera zugeführten Bilddaten zu senden, wenn das mindestens eine vorbestimmte Kriterium erfüllt ist.

11. Verfahren nach Anspruch 10, wobei das eine vorbestimmte Kriterium umfasst:
das Flugzeug befindet sich innerhalb einer ausgewählten Reichweite des Zielflughafens;
das Flugzeug befindet sich innerhalb einer ausgewählten Zeitspanne, bevor es den Zielflughafen erreicht; und
das Flugzeug befindet sich innerhalb einer ausgewählten Luftraumregion.

12. Verfahren nach Anspruch 9, ferner umfassend:
Erzeugen eines emulierten Audiofrequenzsignals mittels eines Emulators (124); und
Zuführen des emulierten Audiofrequenzsignals zum Kommunikationsfunkgerät mittels des Emulators.

13. Verfahren nach Anspruch 12, ferner umfassend:
Zuführen eines Emulatorbefehls mittels des Prozessors zum Emulator, der den Emulator veranlasst, die emulierte Audiofrequenz zu erzeugen.

14. Verfahren nach Anspruch 13, wobei:
das Kommunikationsfunkgerät ein vom Benutzer betätigtes Funkmikrofon (114) einschließt, wobei das Funkmikrofon einen Sendeschalter (118) aufweist, der bei Betätigung mindestens ein Mikrofon-Klicksignal erzeugt; und
das emulierte Audiosignal ein emuliertes Mikrofon-Klicksignal ist.

15. Verfahren nach Anspruch 9, wobei die Lichtsteuereigenschaften eine Übertragungsfrequenz und einen Beleuchtungssystemtyp einschließen.

## Revendications

1. Système de régulation automatique d'éclairage d'aérodrome (100) pour un aéronef, comprenant :
une radio de communication (102) configurée pour transmettre de manière sélective des signaux radiofréquence, c'est-à-dire des signaux RF ;
une source de données d'éclairage d'aérodrome (104) configurée pour au moins fournir sélectivement des données d'éclairage d'aérodrome représentatives de caractéristiques de régulation lumineuse d'un éclairage d'aérodrome associé à des aérodromes individuels ;
une caméra (106) montée sur l'aéronef et ayant un champ de vision, la caméra étant configurée pour capturer des images de l'éclairage d'aérodrome dans son champ de vision et fournir des données d'image représentatives d'une intensité de lumière transmise par l'éclairage d'aérodrome dans son champ de vision ; et
un processeur (108) en communication opérationnelle avec la source de données d'éclairage d'aérodrome, la caméra et la radio de communication, le processeur étant configuré pour :
récupérer, à partir de la source de données d'éclairage d'aérodrome, des données d'éclairage d'aérodrome associées à un aérodrome individuel,
traiter les données d'image fournies par la caméra et
ordonner à la radio de communication de transmettre des signaux RF compatibles avec les caractéristiques de régulation lumineuse associées à l'aérodrome individuel et sur la base des données d'image fournies par la caméra.

2. Système selon la revendication 1, dans lequel le processeur est en outre configuré pour :
recevoir et traiter des données de plan de vol pour déterminer le moment où au moins un critère prédéterminé est rempli, les données de plan de vol comprenant au moins des données représentatives d'un aéroport de destination ayant un aérodrome sur lequel faire atterrir un aéronef ; et
commander automatiquement à la radio de communication de transmettre les signaux RF compatibles avec les caractéristiques de régulation lumineuse associées à l'aérodrome individuel sur lequel l'aéronef peut atterrir et sur la base des données d'image fournies par la caméra lorsque l'au moins un critère prédéterminé est rempli.

3. Système selon la revendication 2, dans lequel l' au moins un critère prédéterminé inclut un élément parmi :
l'aéronef se trouvant à une portée sélectionnée de l'aéroport de destination ;
l'aéronef étant à un laps de temps sélectionné avant d'atteindre l'aéroport de destination ; et
l'aéronef se trouvant dans une région d'espace aérien sélectionnée.

4. Système selon la revendication 1, dans lequel la caméra est sélectionnée dans le groupe constitué d'une caméra infrarouge, c'est-à-dire une caméra IR, d'une caméra multispectrale, d'une caméra hyperspectrale et d'une caméra stéréo.

5. Système selon la revendication 1, comprenant en outre :
un émulateur (124) en communication opérationnelle avec le processeur et la radio de communication, l'émulateur étant configuré pour générer un signal de fréquence audio émulé et fournir le signal de fréquence audio émulé à la radio de communication.

6. Système selon la revendication 5, dans lequel :
le processeur est en outre configuré pour fournir une commande d'émulateur à l'émulateur ; et
l'émulateur réagit à la commande d'émulateur pour générer la fréquence audio émulée.

7. Système selon la revendication 6, dans lequel :
la radio de communication comprend un microphone radio actionné par l'utilisateur (114), le microphone radio ayant un commutateur de transmission (118) qui, lorsqu'il est actionné, génère au moins un signal de clic de microphone ; et
le signal audio émulé est un signal de clic de microphone émulé.

8. Système selon la revendication 1, dans lequel les caractéristiques de régulation lumineuse comprennent une fréquence de transmission et un type de système d'éclairage.

9. Procédé pour réguler automatiquement l'éclairage d'un aérodrome à partir d'un aéronef, le procédé comprenant les étapes de :
récupération sélective, via un processeur (108), de données d'éclairage d'aérodrome associées à un aérodrome individuel à partir d'une source de données d'éclairage d'aérodrome (104) ;
capture d'images, à l'aide d'une caméra (106) ayant un champ de vision et étant montée sur l'aéronef, de l'éclairage d'aérodrome dans le champ de vision de la caméra ;
fourniture de données d'image, de la caméra au processeur, les données d'image étant représentatives d'une intensité de lumière transmise depuis l'éclairage d'aérodrome dans le champ de vision de la caméra ;
traitement des données d'éclairage d'aérodrome et des données d'image dans le processeur ; et, en réponse au traitement des données d'éclairage d'aérodrome et des données d'image, fourniture sélective de commandes, via le processeur, à une radio de communication (102) qui amènent la radio de communication à transmettre des signaux RF compatibles avec les caractéristiques de régulation lumineuse associées à l'aérodrome individuel et sur la base des données d'image fournies par la caméra.

10. Procédé selon la revendication 9, comprenant en outre :
la réception et le traitement de données de plan de vol dans le processeur, les données de plan de vol comprenant au moins des données représentatives d'un aéroport de destination ayant un aérodrome sur lequel faire atterrir un aéronef ;
la détermination, dans le processeur, du moment où au moins un critère prédéterminé est rempli ; et
la fourniture automatique des commandes, via le processeur, à la radio de communication pour transmettre les signaux RF compatibles avec les caractéristiques de régulation lumineuse associées à l'aérodrome individuel sur lequel l' aéronef peut atterrir et sur la base des données d'image fournies par la caméra lorsque l'au moins un critère prédéterminé est rempli.

11. Procédé selon la revendication 10, dans lequel l'au moins un critère prédéterminé comprend un élément parmi :
l'aéronef se trouvant à une portée sélectionnée de l'aéroport de destination ;
l'aéronef étant à un laps de temps sélectionné avant d'atteindre l'aéroport de destination ; et
l'aéronef se trouvant dans une région d'espace aérien sélectionnée.

12. Procédé selon la revendication 9, comprenant en outre :
la génération, via un émulateur (124), d'un signal de fréquence audio émulé ; et
la fourniture, via l'émulateur, du signal de fréquence audio émulé à la radio de communication.

13. Procédé selon la revendication 12, comprenant en outre :
la fourniture d'une commande d'émulateur, via le processeur, à l'émulateur qui amène l'émulateur à générer la fréquence audio émulée.

14. Procédé selon la revendication 13, dans lequel :
la radio de communication comprend un microphone radio actionné par l'utilisateur (114), le microphone radio ayant un commutateur de transmission (118) qui, lorsqu'il est actionné, génère au moins un signal de clic de microphone ; et
le signal audio émulé est un signal de clic de microphone émulé.

15. Procédé selon la revendication 9, dans lequel les caractéristiques de régulation lumineuse comprennent une fréquence de transmission et un type de système d'éclairage.
